# EUROPEAN PATENT APPLICATION

(11) **EP 4 574 481 A1**
(43) Date of publication of application: **25.06.2025**
(21) Application number: 22926736.4
(22) Date of filing: 21.09.2022
(51) Int. Cl.: B60J 1/00, B32B 17/00, C03C 27/12

(54) **LAMINATED GLASS AND VEHICLE**

(71) Applicant: Fuyao Glass Industry Group Co., Ltd., Fuqing, Fujian 350300 (CN)
(72) Inventor: ZHENG, Guoxin, Fuqing, Fujian 350300 (CN); LIN, Shou, Fujian 350300 (CN); ZHENG, Mingsheng, Fujian 350300 (CN)
(74) Representative: Mewburn Ellis LLP
(86) International application number: PCT/CN2022/120283
(87) International publication number: WO 2023/155431

(57) **Abstract**

Laminated glass and a vehicle including the laminated glass are provided. The laminated glass includes a first glass substrate (1), a first adhesive layer (2), a first functional layer (3), a second adhesive layer (4), and a second glass substrate (5). The first glass substrate, the first adhesive layer, the first functional layer, the second adhesive layer, and the second glass substrate are sequentially stacked. A thickness of the first glass substrate is greater than a thickness of the second glass substrate. A thickness of the first adhesive layer is less than a thickness of the second adhesive layer. The laminated glass has an asymmetric structure. By increasing the thickness of part of the laminated glass at the stressed side of the laminated glass and reducing the thickness of part of the laminated glass at the non-stressed side at the stressed side of the laminated glass, the overall mechanical strength of the laminated glass is improved, the weight of the laminated glass is reduced. **In** addition, the asymmetric structure further improves the sound insulating effect of the laminated glass.

## Description

### TECHNICAL FIELD

This disclosure relates to the field of vehicle glass technology, and in particular to laminated glass and a vehicle.

### BACKGROUND

Vehicle windows are important parts of vehicles. A driver can observe environment outside the vehicle through the vehicle window, so that driving safety of the vehicle can be ensured. Vehicle window glass is required to have safety performance parameters such as high strength. Meanwhile, the vehicle window glass is also required to have less weight, so as to reduce the total weight of the vehicle by reducing the weight of the vehicle window, thereby reducing the energy consumption of the vehicle.

### SUMMARY

To solved the technical problem, high-strength and low-weight vehicle window glass is provided in the present disclosure. Therefore, laminated glass and a vehicle provided in the present disclosure. The laminated glass is designed to have an asymmetric structure. By increasing the thickness of part of the laminated glass at the stressed side of the laminated glass and reducing the thickness of part of the laminated glass at the non-stressed side of the laminated glass, the overall mechanical strength of the laminated glass is improved, and the weight of the laminated glass is reduced. In addition, the asymmetric structure of the laminated glass in the present disclosure also improves the sound insulating effect of the laminated glass.

The technical solution adopted by the present disclosure to solve the technical problem in the present disclosure is the following. Laminated glass includes a first glass substrate, a first adhesive layer, a first functional layer, a second adhesive layer, and a second glass substrate. The first glass substrate, the first adhesive layer, the first functional layer, the second adhesive layer, and the second glass substrate are sequentially stacked. A thickness of the first glass substrate is greater than a thickness of the second glass substrate. A thickness of the first adhesive layer is less than a thickness of the second adhesive layer.

In a possible implementation, a ratio of the thickness of the first glass substrate to the thickness of the second glass substrate ranges from 1.17: 1 to 2.91: 1.

In a possible implementation, the ratio of the thickness of the first glass substrate to the thickness of the second glass substrate ranges from 1.17: 1 to 1.5: 1.

In a possible implementation, a ratio of the thickness of the first adhesive layer to the thickness of the second adhesive layer ranges from 1: 8 to 1: 1.1.

In a possible implementation, a mechanical strength of the first glass substrate is greater than a mechanical strength of the second glass substrate.

In a possible implementation, a hardness of the second adhesive layer is less than a hardness of the first adhesive layer.

In a possible implementation, the first functional layer is at least one of an infrared reflecting layer, an ultraviolet absorbing layer, a touch film layer, a polymer dispersed liquid crystal (PDLC) film layer, and a display film.

In a possible implementation, the first functional layer is a third glass substrate. The thickness of the first glass substrate is greater than a thickness of the third glass substrate. The thickness of the third glass substrate is greater than the thickness of the second glass substrate.

In a possible implementation, a ratio of the thickness of the first glass substrate to the thickness of the third glass substrate to the thickness of the second glass substrate is (2.91 to 2): (2 to 1.17): 1.

In a possible implementation, the ratio of the thickness of the first glass substrate to the thickness of the third glass substrate to the thickness of the second glass substrate is (1.5 to 1.3): (1.3 to 1.17): 1.

In a possible implementation, a mechanical strength of the first glass substrate is greater than a mechanical strength of the third glass substrate. The mechanical strength of the third glass substrate is greater than a mechanical strength of the second glass substrate.

In a possible implementation, the laminated glass further includes a second functional layer and a connecting layer. The second functional layer is disposed between the first functional layer and the second adhesive layer. The connecting layer is disposed between the first functional layer and the second functional layer, and is configured to connect the first functional layer to the second functional layer.

In a possible implementation, a thickness of the first functional layer is greater than a thickness of the second functional layer.

In a possible implementation, a ratio of a thickness of the first functional layer to a thickness of the second functional layer ranges from 2: 1 to 3: 1.

In a possible implementation, a hardness of the first functional layer is greater than a hardness of the second functional layer.

In a possible implementation, a thickness of the connecting layer ranges from 0.1 mm to 0.4 mm.

In a possible implementation, the thickness of the connecting layer ranges from 0.1 mm to 0.2 mm.

In a possible implementation, the second functional layer is at least one of an infrared reflecting layer, an ultraviolet absorbing layer, a touch film layer, a PDLC film layer, and a display film.

In a possible implementation, the laminated glass further includes a touch film layer. The touch film layer is disposed between the second glass substrate and the second adhesive layer. The touch film layer is configured to detect a touch signal.

A vehicle is further provided in the present disclosure. The vehicle includes a vehicle body and the laminated glass of the present disclosure. The first glass substrate faces an exterior of the vehicle body. The second glass substrate faces an interior of the vehicle body.

The laminated glass of the present disclosure can be applied to an enclosed space such as a vehicle, a building, an instrument, etc., so as to facilitate observation of the external environment of the enclosed space or observation of the internal condition of the enclosed space through the laminated glass. The first glass substrate of the laminated glass is a component which directly bears the external pressure. When the external pressure acts on the laminated glass, the impact of the external pressure acts on the first glass substrate first, and then the impact is transmitted to the second glass substrate after being received and absorbed by the first glass substrate. In this process, the first glass substrate is subjected to the most impact, and then the impact of the external pressure will be gradually weakened, resulting in less impact on the second glass substrate. As a result, the bearing performance of the second glass substrate is not fully utilized and redundancy occurs. However, in the solution of the present disclosure, by increasing the thickness of the first glass substrate subjected to the most impact of the external pressure, and reducing the thickness of the second glass substrate subjected to the least impact of the external pressure, the bearing performance of the glass substrate can be maximally developed, so that the overall mechanical strength of the laminated glass is improved. After the laminated glass is subjected to external impact, the laminated glass tends to be passively deformed under the external pressure. The first adhesive layer is disposed on the first glass substrate. When the external pressure acts on the laminated glass, the external pressure directly acts on the first glass substrate. In this case, the first adhesive layer is designed to be relatively thin and relatively hard, which helps to ensure the stability of the connection between the first glass substrate and other components of the laminated glass. Then, when the impact of the external pressure reaches the second adhesive layer, the impact of the external pressure has been gradually weakened. In this case, the second adhesive layer is designed to be relatively thick and less hard, so that the deformation of the laminated glass under the external pressure can be absorbed to realize a buffering effect, thereby improving the overall stability of the laminated glass.

### BRIEF DESCRIPTION OF THE DRAWINGS

FIG. 1 is a schematic structural view of laminated glass including a single-layer functional coating provided in an embodiment of the present disclosure.
FIG. 2 is a schematic structural view of laminated glass including multiple functional coatings provided in an embodiment of the present disclosure.
FIG. 3 is a schematic structural view of laminated glass including multiple glass substrates provided in an embodiment of the present disclosure.
FIG. 4 is a schematic view of a vehicle provided in an embodiment of the present disclosure.

Description of reference signs of the accompanying drawings: 100 - laminated glass; 200 - vehicle; 1 - first glass substrate; 2 - first adhesive layer; 3 - first functional layer; 4 - second adhesive layer; 5 - second glass substrate; 6 - third glass substrate; 7 - connecting layer; 8 - second functional layer; 9 - vehicle body.

### DETAILED DESCRIPTION

To make the objectives, technical solutions, and advantages of the present disclosure clearer, the following further describes the present disclosure in detail with reference to the accompanying drawings and embodiments. It may be understood that the specific embodiments described herein are merely used to explain the present disclosure, but are not intended to limit the present disclosure.

In the description of the present disclosure, it may be noted that, the term "embodiment" or "implementation" referred to herein means that particular features, structures, or properties described in conjunction with embodiments or implementations may be defined in at least one embodiment of the present disclosure. The phrase "embodiment" or "implementation" appearing in various places in the specification does not necessarily refer to the same embodiment or an independent/alternative embodiment that is mutually exclusive with other embodiments. The orientation or positional relations indicated by terms such as "center", "upper", "lower", "left", "right", "vertical", "horizontal", "interior", "exterior", etc., are orientation or positional relations based on the accompanying drawings, are only for facilitating description of the present disclosure and simplifying the description, rather than indicating or implying that the referred devices or elements must be in a particular orientation or constructed or operated in the particular orientation, and therefore cannot be construed as limiting the present disclosure. In addition, terms "first", "second", and "third" are only used for description and cannot be understood as explicitly or implicitly indicating relative importance.

In addition, technical features involved in different implementations of the present disclosure described above may be combined with each other as long as they do not conflict with each other.

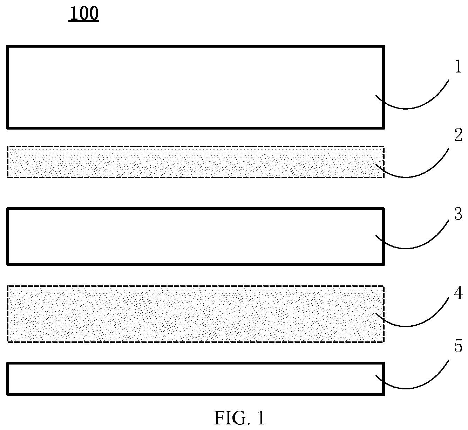

Referring to FIG. 1, laminated glass 100 includes a first glass substrate 1, a first adhesive layer 2, a first functional layer 3, a second adhesive layer 4, and a second glass substrate 5. The first glass substrate 1, the first adhesive layer 2, the first functional layer 3, the second adhesive layer 4, and the second glass substrate 5 are sequentially stacked. The thickness of the first glass substrate 1 is greater than the thickness of the second glass substrate 5. The thickness of the first adhesive layer 2 is less than the thickness of the second adhesive layer 4.

Optionally, when the laminated glass 100 in the present disclosure is used as vehicle window glass in a vehicle, a surface of the first glass substrate 1 away from the second glass substrate 5 faces the exterior of the vehicle, and a surface of the second glass substrate 5 away from the first glass substrate 1 faces the interior of the vehicle. In other words, the surface of the first glass substrate 1 away from the second glass substrate 5 is an impact surface, an outer surface, or an appearance surface. The first glass substrate 1, the first adhesive layer 2, the first functional layer 3, the second adhesive layer 4, and the second glass substrate 5 are sequentially stacked. In other words, the first glass substrate 1 and the first functional layer 3 are bonded through the first adhesive layer 2, and the first functional layer 3 and the second glass substrate 5 are bonded through the second adhesive layer 4.

Optionally, when an external pressure acts on the laminated glass 100, an impact of the external pressure acts on the first glass substrate 1 first, and then the impact is transmitted to the second glass substrate 5 after being received and absorbed by the first glass substrate 1. The first glass substrate is subjected to more impact, and the second glass substrate is subjected to less impact. Therefore, in the present disclosure, the thickness of the first glass substrate 1 is greater than the thickness of the second glass substrate 5, so that the bearing performance of the glass substrate is maximally developed, and the overall mechanical strength of the laminated glass 100 is improved. After the laminated glass 100 is subjected to the external impact, the laminated glass 100 is deformed under the external pressure. The first adhesive layer 2 is disposed on the first glass substrate 1. When the external pressure acts on the laminated glass 100, the external pressure directly acts on the first glass substrate 1. In this case, the first adhesive layer 2 is designed to be relatively thin, which helps to ensure the stability of the connection between the first glass substrate 1 and other components of the laminated glass 100. Then, when the impact of the external pressure reaches the second adhesive layer 4, the impact of the external pressure has been gradually weakened. In this case, the second adhesive layer 4 is designed to be relatively thick and less hard, so that the deformation of the laminated glass 100 under the external pressure can be absorbed to realize a buffering effect, thereby improving the overall stability of the laminated glass 100.

In a possible implementation, a ratio of the thickness of the first glass substrate 1 to the thickness of the second glass substrate 5 ranges from 1.17: 1 to 2.91: 1. Specifically, the ratio of the thickness of the first glass substrate 1 to the thickness of the second glass substrate 5 may be, but is not limited to, 1.17: 1, 1.2: 1, 1.4: 1, 1.6: 1, 1.8: 1, 2: 1, 2.2: 1, 2.4: 1, 2.6: 1, 2.8: 1, 2.91: 1. In a possible implementation, the ratio of the thickness of the first glass substrate 1 to the thickness of the second glass substrate 5 ranges from 1.17: 1 to 1.5: 1. Specifically, the ratio of the thickness of the first glass substrate 1 to the thickness of the second glass substrate 5 may be, but is not limited to, 1.17: 1, 1.2: 1, 1.23: 1, 1.25: 1, 1.27: 1, 1.3: 1, 1.33: 1, 1.35: 1, 1.37: 1, 1.4: 1.

When the external pressure acts on the laminated glass 100, the impact of the external pressure acts on the first glass substrate 1, and then the impact is transmitted to the second glass substrate 5 after being received and absorbed by the first glass substrate 1. The external impact received by the first glass substrate 1 is different from the external impact received by the second glass substrate 5, that is, the first glass substrate 1 is subjected to more impact and the second glass substrate 5 is subjected to less impact. Hence, in the present disclosure, the ratio of the thickness of the first glass substrate 1 to the thickness of the second glass substrate 5 is controlled, so that the bearing performance of the first glass substrate 1 and the second glass substrate 5 can be fully utilized and redundancy is avoided. When the ratio of the thickness of the first glass substrate 1 to the thickness of the second glass substrate 5 ranges from 1.17: 1 to 2.91: 1, the bearing performance of the first glass substrate 1 and the second glass substrate 5 can be fully utilized. Further, when the ratio of the thickness of the first glass substrate 1 to the thickness of the second glass substrate 5 ranges from 1.17: 1 to 1.5: 1, the bearing performance of the first glass substrate 1 and the second glass substrate 5 can be more fully utilized, which helps to reduce the thickness of the laminated glass 100 and improve the mechanical strength of the laminated glass 100. When the ratio of the thickness of the first glass substrate 1 to the thickness of the second glass substrate 5 is less than 1.17: 1, the bearing performance of the second glass substrate 5 cannot be fully utilized and redundancy occurs, so that the excessively thick second glass substrate 5 results in an increase in the overall thickness of the laminated glass 100 without any change in the mechanical strength of the laminated glass 100. When the ratio of the thickness of the first glass substrate 1 to the thickness of the second glass substrate 5 is greater than 2.91: 1, the thickness of the first glass substrate 1 is too large, which is adverse to the thinning of the laminated glass 100.

Optionally, the thickness of the first glass substrate 1 ranges from 2.1 mm to 4.0 mm. Specifically, the thickness of the first glass substrate 1 may be, but is not limited to, 2.1 mm, 2.3 mm, 2.5 mm, 2.8 mm, 3.0 mm, 3.2 mm, 3.5 mm, or 4.0 mm.

Optionally, the thickness of the second glass substrate 5 ranges from 1.1 mm to 2.1 mm. Specifically, the thickness of the second glass substrate 5 may be, but is not limited to, 1.1 mm, 1.2 mm, 1.3 mm, 1.4 mm, 1.5 mm, 1.6 mm, 1.8 mm, 2.0 mm, or 2.1 mm.

Specifically, when the thickness of the first glass substrate 1 ranges from 2.1 mm to 4.0 mm and the thickness of the second glass substrate 5 ranges from 1.1 mm to 2.1 mm, the ratio of the thickness of the first glass substrate 1 to the thickness of the second glass substrate 5 still satisfies 1.17: 1 to 2.91: 1, so that the bearing performance of the first glass substrate 1 and the second glass substrate 5 is fully utilized and redundancy is avoided. Since the first glass substrate 1 is directly impacted by the external pressure, the mechanical strength of the first glass substrate 1 directly influences the mechanical strength of the laminated glass 100. When the thickness of the first glass substrate 1 is excessively thick and greater than 4.0 mm, the bearing performance of the first glass substrate 1 itself will lead to redundancy in practical application scenarios, and due to the excessively thick first glass substrate 1, the laminated glass 100 has excessive and unnecessary weight. When the thickness of the first glass substrate 1 is excessively thin and less than 2.1 mm, the bearing performance of the first glass substrate 1 itself is insufficient and the laminated glass 100 cannot be protected. When the thickness of the second glass substrate 5 is excessively thick and greater than 2.1 mm, the bearing performance of the second glass substrate 5 cannot be fully utilized, and redundancy occurs, so that the excessively thick second glass substrate 5 results in an increase in the overall thickness of the laminated glass 100 without any change in the mechanical strength of the laminated glass 100. When the thickness of the second glass substrate 5 is excessively thin and less than 1.1 mm, the bearing performance of the second glass substrate 5 is difficult to bear the impact of the external pressure transmitted from the first glass substrate 1, resulting in the weakening of the mechanical strength of the laminated glass 100 itself.

In a possible implementation, the ratio of the thickness of the first adhesive layer 2 to the thickness of the second adhesive layer 4 ranges from 1: 8 to 1: 1.1. Specifically, the ratio of the thickness of the first adhesive layer 2 to the thickness of the second adhesive layer 4 may be, but is not limited to, 1: 8, 1: 7, 1: 6, 1: 5, 1: 4, 1: 3, 1: 2, 1: 1.1. Further, the ratio of the thickness of the first adhesive layer 2 to the thickness of the second adhesive layer 4 ranges from 1: 3 to 1: 1.1.

When the external pressure acts on the laminated glass 100, the laminated glass 100 tends to be passively deformed under the external pressure. Since the first glass substrate 1 is subjected to the most impact of the external pressure, the first adhesive layer 2 disposed on the first glass substrate 1 is designed to be relatively thin, so as to ensure the stability of the connection between the first glass substrate 1 and other components of the laminated glass 100. Then, when the impact of the external pressure reaches the second adhesive layer 4, the impact of the external pressure has been gradually weakened. In this case, the second adhesive layer 4 is designed to be relatively thick, so that the deformation of the laminated glass 100 under the external pressure can be absorbed to realize the buffering effect. Therefore, in the present disclosure, by controlling the ratio of the thickness of the first glass substrate 1 to the thickness of the second glass substrate 5 to be between 1: 8 and 1: 1.1, the first adhesive layer 2 can have good stability, and the second adhesive layer 4 can have good buffering performance, thereby improving the overall stability of the laminated glass 100.

Optionally, the thickness of the first adhesive layer 2 ranges from 0.1 mm to 0.38 mm. Specifically, the thickness of the first adhesive layer 2 may be, but is not limited to, 0.1 mm, 0.15 mm, 0.2 mm, 0.25 mm, 0.3 mm, 0.35 mm, or 0.38 mm.

Optionally, the thickness of the second adhesive layer 4 ranges from 0.38 mm to 0.76 mm. Specifically, the thickness of the second adhesive layer 4 may be, but is not limited to, 0.38 mm, 0.42 mm, 0.46 mm, 0.50 mm, 0.54 mm, 0.58 mm, 0.62 mm, 0.66 mm, 0.70 mm, 0.72 mm, or 0.76 mm.

Optionally, when the sum of the thickness of the first adhesive layer 2 and the thickness of the second adhesive layer 4 is 1.14 mm, the ratio of the thickness of the first adhesive layer 2 to the thickness of the second adhesive layer 4 is 1: 2. When the sum of the thickness of the first adhesive layer 2 and the thickness of the second adhesive layer 4 is 10.64 mm, the ratio of the thickness of the first adhesive layer 2 to the thickness of the second adhesive layer 4 is 1: 6. In other words, the sum of the thickness of the first adhesive layer 2 and the thickness of the second adhesive layer 4 is relatively large, and the ratio of the thickness of the first adhesive layer 2 to the thickness of the second adhesive layer 4 is relatively small.

In a possible implementation, the mechanical strength of the first glass substrate 1 is greater than the mechanical strength of the second glass substrate 5. When the external pressure acts on the laminated glass 100, the impact of the external pressure acts on the first glass substrate 1, and then the impact is transmitted to the second glass substrate 5 after being received and absorbed by the first glass substrate 1. The external impact received by the first glass substrate 1 is different from the external impact received by the second glass substrate 5, that is, the first glass substrate 1 is subjected to more impact and the second glass substrate 5 is subjected to less impact. Hence, in the present disclosure, the first glass substrate 1 may be made of materials with greater mechanical strength. In other words, when the first glass substrate 1 and the second glass substrate 5 are made of materials with the same mechanical strength, the strength of the first glass substrate 1 can be improved by increasing the thickness of the first glass substrate 1, so that the first glass substrate 1 can be subjected to the impact caused by the greater external pressure, thereby increasing the mechanical strength of the laminated glass 100. Alternatively, the first glass substrate 1 may be made of a material with a greater mechanical strength than the second glass substrate 5, so that the first glass substrate 1 has the greater mechanical strength, and can be subjected to the impact caused by the greater external pressure, thereby increasing the mechanical strength of the laminated glass 100.

Optionally, the first glass substrate 1 is chemically tempered glass and the second glass substrate 5 is tempered glass.

Specifically, the mechanical strength of the first glass substrate 1 ranges from 500 MPa to 1100 MPa, and the mechanical strength of the second glass substrate 5 ranges from 96 MPa to 120 MPa.

In a possible implementation, the hardness of the second adhesive layer 4 is less than the hardness of the first adhesive layer 2. When the external pressure acts on the laminated glass 100, the laminated glass 100 tends to be passively deformed under the external pressure, and the first glass substrate 1 is subjected to the most impact of the external pressure. Therefore, the first adhesive layer 2 disposed on the first glass substrate 1 is designed to be relatively thin, so as to ensure that the first adhesive layer 2 is relatively great and ensure the stability of the connection between the first glass substrate 1 and other components of the laminated glass 100. Then, when the impact of the external pressure reaches the second adhesive layer 4, the impact of the external pressure has been gradually weakened. In this case, the second adhesive layer 4 is designed to be relatively thick to ensure that the hardness of the second adhesive layer 4 is relatively less, so that the deformation of the laminated glass 100 under the external pressure can be absorbed to realize the buffering effect. In other words, in the present disclosure, the hardness of the first adhesive layer 2 is greater than the hardness of the second adhesive layer 4, so that the first adhesive layer 2 can have good stability, and the second adhesive layer 4 can have good buffering performance, thereby improving the overall stability of the laminated glass 100.

Optionally, the hardness of the second adhesive layer 4 ranges from 40 HA to 50 HA. The hardness of the first adhesive layer 2 ranges from 50 HA to 60 HA.

In a possible implementation, the first functional layer 3 is at least one of an infrared reflecting layer, an ultraviolet absorbing layer, a touch film layer, a polymer dispersed liquid crystal (PDLC) film layer, and a display film layer.

Optionally, the PDLC film layer may be at least one of a suspended-particle device (SPD) dimming film, an electrochromic (EC) dimming film, and a liquid crystal (LC) dimming film.

The thickness of the infrared reflecting layer ranges from 6 nm to 90 nm. The infrared reflecting layer is configured to reflect infrared light in sunlight to prevent the temperature inside the vehicle from being too high due to the infrared light, when the laminated glass 100 is used as vehicle window glass on a vehicle. The thickness of the ultraviolet absorbing layer ranges from 20 nm to 84 nm. The ultraviolet absorbing layer is configured to absorb ultraviolet light in sunlight to prevent the ultraviolet light from damaging the skin of a person in the vehicle, when the laminated glass 100 is used as the vehicle window glass on the vehicle. The thickness of the touch film layer ranges from 37 nm to 132 nm. The touch film layer is configured to detect a touch signal applied to the laminated glass 100. When the laminated glass 100 is used as the vehicle window glass on the vehicle, the touch film layer is configured to detect a touch signal and control components such as a vehicle window lamp, a sensor lamp, an atmosphere lamp, a sensor, a processor, etc., on the vehicle according to the touch signal. The thickness of the PDLC film layer ranges from 25 nm to 98 nm. The PDLC is configured to switch between a transparent state or a non-transparent state to adjust the laminated glass 100 to be in a transparent state or a non-transparent state.

Optionally, the laminated glass 100 formed by sequentially stacking the first glass substrate 1, the first adhesive layer 2, the first functional layer 3, the second adhesive layer 4, and the second glass substrate 5, has an asymmetric structure with the first functional layer 3 as a central layer. When a sound wave propagates in the laminated glass 100 of the present disclosure, the asymmetric structure enables a large loss of the sound wave in the propagation process, so that a sound insulating effect of the laminated glass 10 of the present disclosure can be improved when the laminated glass 100 is applied for the vehicle.

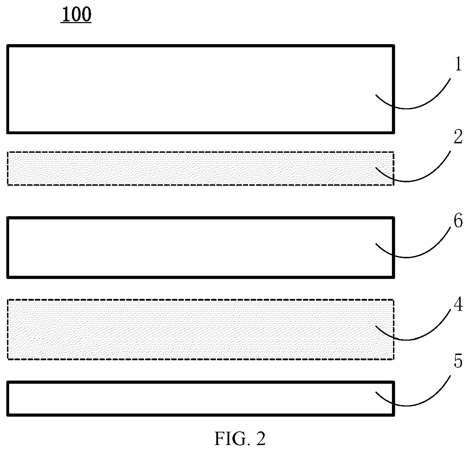

Referring to FIG. 2, in a possible implementation, the first functional layer 3 is a third glass substrate 6. The thickness of the first glass substrate 1 is greater than the thickness of the third glass substrate 6. The thickness of the third glass substrate 6 is greater than the thickness of the second glass substrate 5.

When the external pressure acts on the laminated glass 100, the impact of the external pressure acts on the first glass substrate 1 first, then the impact is transmitted to the third glass substrate 6 after being received and absorbed by the first glass substrate 1, and then the impact is transmitted to the second glass substrate 5 after being received and absorbed by the third glass substrate 6. The first glass substrate 1 is subjected to the most impact, the third glass substrate 6 is subjected to the second most impact, and the second glass substrate 5 is subjected to the least impact. Therefore, in the present disclosure, by sequentially reducing the thicknesses of the first glass substrate 1, the third glass substrate 6, and the second glass substrate 5, the bearing performance of the glass substrate is maximally developed, thereby improving the overall mechanical strength of the laminated glass 100.

In a possible implementation, the ratio of the thickness of the first glass substrate 1 to the thickness of the third glass substrate 6 to the thickness of the second glass substrate 5 is (2.91 to 2): (2 to 1.17): 1. Specifically, the ratio of the thickness of the first glass substrate 1 to the thickness of the third glass substrate 6 to the thickness of the second glass substrate 5 may be, but is not limited to, 2.91: 2: 1, 2.8: 2: 1, 2.7: 2: 1, 2.6: 2: 1, 2.5: 2: 1, 2.4: 1.8: 1, 2.2: 1.5: 1, 2.2: 1.2: 1, 2: 1.1.17: 1. In a possible implementation, the ratio of the thickness of the first glass substrate 1 to the thickness of the third glass substrate 6 to the thickness of the second glass substrate 5 is (1.5 to 1.3): (1.3 to 1.17): 1. Specifically, the ratio of the thickness of the first glass substrate 1 to the thickness of the third glass substrate 6 to the thickness of the second glass substrate 5 may be, but is not limited to, 1.5: 1.3: 1, 1.5: 1.2: 1, 1.5: 1.17: 1, 1.45: 1.17: 1, 1.4: 1.17: 1, 1.35: 1.17: 1, 1.3: 1.17: 1. When the ratio of the thickness of the first glass substrate 1 to the thickness of the third glass substrate 6 to the thickness of the second glass substrate 5 is (2.91 to 2): (2 to 1.17): 1, the bearing performance of the first glass substrate 1, the third glass substrate 6, and the second glass substrate 5 can be more fully utilized, which helps to reduce the thickness of the laminated glass 100 and improve the mechanical strength of the laminated glass 100. Further, when the ratio of the thickness of the first glass substrate 1 to the thickness of the third glass substrate 6 to the thickness of the second glass substrate 5 is (1.5 to 1.3): (1.3 to 1.17): 1, the bearing performance of the first glass substrate 1, the third glass substrate 6, and the second glass substrate 5 can be further fully utilized, which helps to reduce the thickness of the laminated glass 100 and improve the mechanical strength of the laminated glass 100.

Optionally, the thickness of the third glass substrate 6 ranges from 1.4 mm to 3.2 mm. Specifically, the thickness of the third glass substrate 6 may be, but is not limited to, 1.4 mm, 1.5 mm, 1.6 mm, 1.7 mm, 1.8 mm, 1.9 mm, 2.0 mm, 2.1 mm, 2.2 mm, 2.2 mm, 2.3 mm, 2.4 mm, 2.5 mm, 2.6 mm, 2.7 mm, 2.8 mm, 2.9 mm, 3.0 mm, 3.1 mm, or 3.2 mm. The thickness of the third glass substrate 6 is between the thickness of the first glass substrate 1 and the thickness of the second glass substrate 5. By sequentially reducing the thicknesses of the first glass substrate 1, the third glass substrate 6, and the second glass substrate 5, the bearing performance of the glass substrate can be maximally developed, and the overall mechanical strength of the laminated glass 100 of the present disclosure is improved.

In a possible implementation, the mechanical strength of the first glass substrate 1 is greater than the mechanical strength of the third glass substrate 6. The mechanical strength of the third glass substrate 6 is greater than the mechanical strength of the second glass substrate 5.

When the external pressure acts on the laminated glass 100, the impact of the external pressure acts on the first glass substrate 1, then the impact is transmitted to the third glass substrate 6 after being received and absorbed by the first glass substrate 1, and then the impact is transmitted to the second glass substrate 5 after being received and absorbed by the third glass substrate 6. The external impact received by the first glass substrate 1, the external impact received by the third glass substrate 6, and the external impact received by the second glass substrate 5 are different from one other, that is, the first glass substrate 1 is subjected to the most impact, the third glass substrate 6 is subjected to the second most impact, and the second glass substrate 5 is subjected to the least impact. Therefore, in the present disclosure, the first glass substrate 1 and/or the third glass substrate 6 may be made of materials with greater mechanical strength. In other words, when the first glass substrate 1, the third glass substrate 6, and the second glass substrate 5 are made of materials with the same mechanical strength, the strength of the first glass substrate 1 can be improved by increasing the thickness of the first glass substrate 1, and the strength of the third glass substrate 6 can be improved by increasing the thickness of the third glass substrate 6, so that the first glass substrate 1 and the third glass substrate 6 can be subjected to the impact caused by the greater external pressure, thereby increasing the mechanical strength of the laminated glass 100. Alternatively, the first glass substrate 1 and the third glass substrate 6 each may be made of a material with a greater mechanical strength than the second glass substrate 5, so that the first glass substrate 1 has the greater mechanical strength, and can be subjected the impact caused by the greater external pressure, thereby increasing the mechanical strength of the laminated glass 100.

Optionally, the laminated glass sheet 100 further includes multiple glass substrates and multiple adhesive layers. The multiple glass substrates are stacked between the first glass substrate 1 and the second glass substrate 5. The multiple glass substrates are connected to the first glass substrate 1 through an adhesive layer, and the multiple glass substrates are connected to the second glass substrate 5 through an adhesive layer. In a direction from the first glass substrate 1 to the second glass substrate 5, thicknesses of the multiple glass substrates are gradually reduced, and thicknesses of the multiple adhesive layers are gradually increased; or mechanical strengths of the multiple glass substrates are gradually reduced, and hardnesses of the multiple adhesive layers are gradually reduced.

Optionally, the laminated glass 100 formed by sequentially stacking the first glass substrate 1, the first adhesive layer 2, the third glass substrate 6, the second adhesive layer 4, and the second glass substrate 5, has an asymmetric structure with the third glass substrate 6 as a central layer.

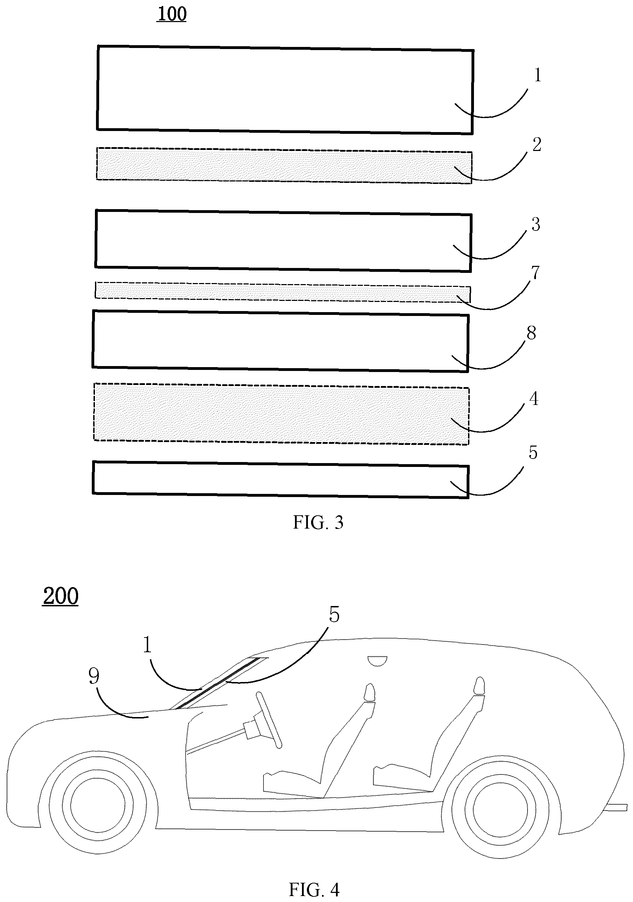

Referring to FIG. 3, in a possible implementation, the laminated glass 100 further includes a second functional layer 8 and a connecting layer 7. The second functional layer 8 is disposed between the first functional layer 3 and the second adhesive layer 4. The connecting layer 7 is disposed between the first functional layer 3 and the second functional layer 8, and is configured to connect the first functional layer 3 to the second functional layer 8.

Optionally, the adhesive layer is configured to connect the first functional layer 3 to the second functional layer 8, so that the first functional layer 3 and the second functional layer 8 form a functional layer group, to provide various functions for the laminated glass 100. Optionally, the laminated glass 100 further includes multiple functional layers and multiple connecting layers 7 between the multiple functional layers. The multiple connecting layers 7 are configured to connect the multiple functional layers to form a functional layer group, to provide corresponding functions for the laminated glass 100.

In a possible implementation, the thickness of the first functional layer 3 is greater than the thickness of the second functional layer 8. When the external pressure acts on the laminated glass 100, the impact of the external pressure reaches the first functional layer 3 first and then reaches the second functional layer 8 in the process of transmission of the impact in the laminated glass 100. The external impact received by the first functional layer 3 is different from the external impact received by the second functional layer 8, that is, the first functional layer 3 is subjected to more impact, and the second functional layer 8 is subjected to less impact. Therefore, in the present disclosure, a functional layer having a greater thickness is designed as the first functional layer 3 to be subjected to more impact, thereby ensuring that structures of the first functional layer 3 and the second functional layer 8 are stable, and facilitating stability of the laminated glass 100.

In a possible implementation, a ratio of the thickness of the first functional layer 3 to the thickness of the second functional layer 8 ranges from 2: 1 to 3: 1. Specifically, the ratio of the thickness of the first functional layer 3 to the thickness of the second functional layer 8 may be, but is not limited to, 2: 1, 2.1: 1, 2.2: 1, 2.3: 1, 2.4: 1, 2.5: 1, 2.6: 1, 2.7: 1, 2.8: 1, 2.9: 1, or 3: 1. When the ratio of the thickness of the first functional layer 3 to the thickness of the second functional layer 8 ranges from 2: 1 to 3: 1, the impact of the external pressure on the first functional layer 3 and the second functional layer 8 can be more reasonably distributed, which helps to improve the mechanical strength of the laminated glass 100 and improve the stability of the laminated glass 100.

In a possible implementation, the hardness of the first functional layer 3 is greater than the hardness of the second functional layer 8. When the external pressure acts on the laminated glass 100, the impact of the external pressure reaches the first functional layer 3 first and then reaches the second functional layer 8 in the process of transmission of the impact in the laminated glass 100. The external impact received by the first functional layer 3 is different from the external impact received by the second functional layer 8, that is, the first functional layer 3 is subjected to more impact, and the second functional layer 8 is subjected to less impact. Therefore, in the present disclosure, in order to distribute the impact of the external pressure to be received by the first functional layer 3 and the second functional layer 8 more reasonably, a functional layer having the greater hardness is designed as the first functional layer 3 to bear more impact, thereby ensuring that the structures of the first functional layer 3 and the second functional layer 8 are stable, and facilitating the stability of the laminated glass 100.

In a possible implementation, the thickness of the connecting layer 7 ranges from 0.1 mm to 0.4 mm. Specifically, the thickness of the connecting layer 7 may be 0.1 mm, 0.15 mm, 0.2 mm, 0.25 mm, 0.3 mm, 0.35 mm, or 0.4 mm. In a possible implementation, the thickness of the connecting layer 7 ranges from 0.1 mm to 0.2 mm. Specifically, the thickness of the connecting layer 7 may be 0.1 mm, 0.11 mm, 0.12 mm, 0.13 mm, 0.14 mm, 0.15 mm, 0.16 mm, 0.17 mm, 0.18 mm, 0.19 mm, 0.2 mm. In order to ensure that the structures of the first functional layer 3 and the second functional layer 8 are stable so that the functions of the first functional layer 3 and the second functional layer 8 are normal, the adhesive layer is used to connect the first functional layer 3 and the second functional layer 8. In addition, when the thickness of the adhesive layer is less, the hardness of the adhesive layer can be ensured to be greater, thereby better improving the stability of the first functional layer 3 and the second functional layer 8. In the present disclosure, the thickness of the connecting layer 7 ranges from 0.1 mm to 0.4 mm. Further, the thickness of the connecting layer 7 ranges from 0.1 mm to 0.2 mm. In this case, the adhesive layer is relatively thin and relatively hard, so that the stability of the first functional layer 3 and the second functional layer 8 is relatively high.

In a possible implementation, the second functional layer 8 is at least one of an infrared reflecting layer, an ultraviolet absorbing layer, a touch film layer, a PDLC film layer, and a display film. The PDLC film layer may be, but is not limited to, one of an SPD dimming film, an EC dimming film, and an LC dimming film. Specifically, the thickness of the infrared reflecting layer ranges from 6 nm to 90 nm. The infrared reflecting layer is configured to reflect infrared light in sunlight to prevent the temperature inside the vehicle from being too high due to the infrared light, when the laminated glass 100 is used as vehicle window glass on a vehicle. The thickness of the ultraviolet absorbing layer ranges from 20 nm to 84 nm. The ultraviolet absorbing layer is configured to absorb ultraviolet light in sunlight to prevent the ultraviolet light from damaging the skin of a person in the vehicle, when the laminated glass 100 is used as the vehicle window glass on the vehicle. The thickness of the touch film layer ranges from 37 nm to 132 nm. The touch film layer is configured to detect a touch signal applied to the laminated glass 100. When the laminated glass 100 is used as the vehicle window glass on the vehicle, the touch film layer is configured to detect a touch signal and control components such as a vehicle window lamp, a sensor lamp, an atmosphere lamp, a sensor, a processor, etc., on the vehicle according to the touch signal. The thickness of the PDLC film layer ranges from 25 nm to 98 nm. The PDLC is configured to switch between a transparent state or a non-transparent state to adjust the laminated glass 100 to be in a transparent state or a non-transparent state.

In a possible embodiment, the laminated glass 100 further includes a touch film layer. The touch film layer is disposed between the second glass substrate 5 and the second adhesive layer 4. The touch film layer is configured to detect a touch signal.

Optionally, the touch film layer is disposed on the second glass substrate 5. The second adhesive layer 4 is disposed on a surface of the touch film layer away from the second glass substrate 5. The touch film layer includes an electrical conductor and a controller. Elongated electrodes are plated on four edges of the electrical conductor of the touch film layer, so that a low-voltage alternating-current electric field is formed in the electrical conductor. When a user of the laminated glass 100 touches the second glass substrate 5, coupling capacitance is formed between a finger and an electrical conductor layer due to an electric field also formed by the human body, and a current generated by electrodes located at four edges flows to a touch point. Since the current intensity is proportional to the distance between the finger and the electrode, the controller on the second glass substrate 5 can calculate the current proportion and current intensity, thereby calculating the position of the touch point accurately. When the laminated glass 100 is used as the vehicle window glass on the vehicle, the touch film layer controls components such as a vehicle window lamp, a sensor lamp, an atmosphere lamp, a sensor, and a processor on the vehicle by means of the positions of different touch points.

Referring to Table 1 to Table 3, physicochemical properties of laminated glass of the present disclosure are shown in Table 1 to Table 3.

Examples 1 to 5 and comparative examples 1 to 5 each illustrate laminated glass in which a first glass substrate, a first adhesive layer, a first functional layer, a second adhesive layer, a second glass substrate are sequentially stacked and subjected to compression moulding. A mean stress of laminated glass in each of examples 1 to 5 and comparative examples 1 to 5 is 23 MPa. Examples 6 to 10 and comparative examples 6 to 10 each illustrate laminated glass in which a first glass substrate, a first adhesive layer, a third glass substrate, a second adhesive layer, a second glass substrate are sequentially stacked and subjected to compression moulding. A mean stress of laminated glass in each of examples 6 to 10 and comparative examples 6 to 10 is 25 MPa. Examples 11 to 15 and comparative examples 11 to 15 each illustrate laminated glass in which a first glass substrate, a first adhesive layer, a first functional layer, an adhesive layer, a second functional layer, a second adhesive layer, a second glass substrate are sequentially stacked and subjected to compression moulding. A mean stress of laminated glass in each of examples 11 to 15 and comparative examples 11 to 15 is 25 MPa.

In examples 1 to 15 and comparative examples 1 to 15, the mean stress is measured as follows. Two points are taken on each edge of the laminated glass, that is, eight points are taken on four edges of the laminated glass in total, stress is tested respectively by a stress meter, and a mean stress value of the eight points is taken to obtain the mean stress of the laminated glass. When two points are taken on one edge of the laminated glass, the edge of the laminated glass is divided into three equal parts by the two points.

In examples 1 to 15 and comparative examples 1 to 15, the method for measuring the maximum static pressure is specified in accordance with Chinese national standard GB/T5137.1. The laminated glass in each of examples 1 to 15 and comparative examples 1 to 15 of the present disclosure is suspended and fixed, a force is applied to the laminated glass in a central range of 40 mm of the laminated glass until the laminated glass is broken by using a tensile machine, and a force value when the laminated glass is broken is recorded, so that the maximum static pressure of the laminated glass is obtained.

**Table 1**

| | Example 1 | Example 2 | Example 3 | Example 4 | Example 5 | Comparative example 1 | Comparative example 2 | Comparative example 3 | Comparative example 4 | Comparative example 5 |
|---|---|---|---|---|---|---|---|---|---|---|
| First glass substrate (mm) | 2.0 | 2.9 | 1.2 | 2.0 | 2.0 | 2.0 | 1.0 | 1.0 | 2.0 | 2.0 |
| First adhesive layer (mm) | 1.0 | 1.0 | 1.0 | 1.0 | 1.0 | 3.0 | 1.0 | 1.0 | 8.0 | 1.1 |
| First functional layer (nm) | 0.4 | 0.4 | 0.4 | 0.4 | 0.4 | 0.4 | 0.4 | 0.4 | 0.4 | 0.4 |
| Second adhesive layer (mm) | 5.0 | 5.0 | 5.0 | 8.0 | 1.1 | 3.0 | 5.0 | 5.0 | 1.0 | 1.0 |
| Second glass substrate (mm) | 1.0 | 1.0 | 1.0 | 1.0 | 1.0 | 2.0 | 2.9 | 1.2 | 1.0 | 1.0 |
| Maximum static pressure (Maximum N) | 1269 | 2231 | 447 | 1178 | 1141 | 887 | 1392 | 386 | 732 | 513 |

As shown in Table 1, in example 1, the thickness of the first adhesive layer is less than the thickness of the second adhesive layer, and the thickness of the first glass substrate is greater than the thickness of the second glass substrate. However, in comparative example 1, the thickness of the first adhesive layer is equal to the thickness of the second adhesive layer, and the thickness of the first glass substrate is equal to the thickness of the second glass substrate. In addition, the sum of the thickness of the first adhesive layer and the thickness of the second adhesive layer in example 1 is equal to the sum of the thickness of the first adhesive layer and the thickness of the second adhesive layer in comparative example 1, and the total thickness of the first glass substrate and the second glass substrate in example 1 is less than the total thickness of the first glass substrate and the second glass substrate in comparative example 1.

However, in the maximum static pressure test, the maximum static pressure of example 1 is greater than the maximum static pressure of comparative example 1 for the following reasons. In the maximum static pressure test, an impact of an external pressure acts on the first glass substrate first, and then the impact is transmitted to the second glass substrate after being received and absorbed by the first glass substrate. The first glass substrate absorbs most of the impact force and the second glass substrate absorbs less of the impact force. Therefore, even though the thickness in comparative example 1 is larger, the second glass substrate exhibited no significant gain. When the laminated glass is impacted by the external pressure, the laminated glass is deformed under the external pressure. When the external pressure acts on the laminated glass, the external pressure directly acts on the first glass substrate, and in this case, the thickness of the first adhesive layer is designed to be relatively thin, which helps to ensure the stability of the connection between the first glass substrate and other components of the laminated glass. Then, when the impact of the external pressure reaches the second adhesive layer, the impact of the external pressure has been gradually weakened, and in this case, the second adhesive layer is designed to be relatively thick and less hard, so that the deformation of the laminated glass under the external pressure can be absorbed, thereby realizing a buffering effect and improving the overall stability of the laminated glass. Therefore, example 1 has a greater maximum static pressure value and better structural stability than comparative example 1.

In the comparison formed between example 2 and comparative example 2, as well as the comparison formed between example 3 and comparative example 3, the first adhesive layers of laminated glass used for the comparison are the same, and the second adhesive layers of laminated glass used for the comparison are the same. In each of example 2 and example 3, the thickness of the first glass substrate is greater than the thickness of the second glass substrate. In each of comparative example 2 and comparative example 3, the thickness of the first glass substrate is less than the thickness of the second glass substrate. The total thickness of the first glass substrate and the second glass substrate in example 2 is equal to the total thickness of the first glass substrate and the second glass substrate in comparative example 2. The total thickness of the first glass substrate and the second glass substrate in example 3 is equal to the total thickness of the first glass substrate and the second glass substrate in comparative example 3. In the maximum static pressure test, the maximum static pressure of example 2 is greater than the maximum static pressure of comparative example 2, and the maximum static pressure of example 3 is greater than the maximum static pressure of comparative example 3, which indicates the following. Under the condition that the first adhesive layer is the same as the second adhesive layer, the impact of the external pressure is transmitted to the second glass substrate after being absorbed by the first glass substrate. The first glass substrate absorbs most of the impact force, and the second glass substrate absorbs less of the impact force. Therefore, even though the total thickness of the first glass substrate and the second glass substrate in example 2 is equal to the total thickness of the first glass substrate and the second glass substrate in comparative example 2, and the total thickness of the first glass substrate and the second glass substrate in example 3 is equal to the total thickness of the first glass substrate and the second glass substrate in comparative example 3, the second glass substrate exhibits no significant gain in improving the overall strength of the laminated glass. Therefore, example 2 has a greater maximum static pressure value and better structural stability than comparative example 2, and example 3 has a greater maximum static pressure value and better structural stability than comparative example 3.

In the comparison formed between example 4 and comparative example 4, as well as the comparison formed between example 5 and comparative example 5, the first glass substrates of laminated glass used for the comparison are the same, and the second glass substrates of laminated glass used for the comparison are the same. In each of example 4 and example 5, the thickness of the first adhesive layer is less than the thickness of the second adhesive layer. In each of comparative example 4 and comparative example 5, the thickness of the first adhesive layer is greater than the thickness of the second adhesive layer. The total thickness of the first glass substrate and the second glass substrate in example 4 is equal to the total thickness of the first glass substrate and the second glass substrate in comparative example 4. The total thickness of the first glass substrate and the second glass substrate in example 5 is equal to the total thickness of the first glass substrate and the second glass substrate in comparative example 5. In the maximum static pressure test, the maximum static pressure of example 4 is greater than the maximum static pressure of comparative example 4, and the maximum static pressure of example 5 is greater than the maximum static pressure of comparative example 5, which indicates the following. Under the condition that the first glass substrate is the same as the second glass substrate, when the laminated glass is impacted by the external pressure, the laminated glass is deformed under the external pressure. When the external pressure acts on the laminated glass, the external pressure directly acts on the first glass substrate, and in this case, the thickness of the first adhesive layer is designed to be relatively thin, which helps to ensure the stability of the connection between the first glass substrate and other components of the laminated glass. Then, when the impact of the external pressure reaches the second adhesive layer, the impact of the external pressure has been gradually weakened, and in this case, the second adhesive layer is designed to be relatively thick and less hard, so that the deformation of the laminated glass under the external pressure can be absorbed, thereby realizing a buffering effect and improving the overall stability of the laminated glass. Therefore, example 4 has a greater maximum static pressure value and better structural stability than comparative example 4, and example 5 has a greater maximum static pressure value and better structural stability than comparative example 5.

**Table 2**

| | Example 6 | Example 7 | Example 8 | Example 9 | Example 10 | Comparative example 6 | Comparative example 7 | Comparative example 8 | Comparative example 9 | Comparative example 10 |
|---|---|---|---|---|---|---|---|---|---|---|
| First glass substrate (mm) | 5.0 | 5.8 | 5.8 | 4.2 | 4.2 | 3.5 | 2.0 | 2.0 | 2.0 | 2.0 |
| First adhesive layer (mm) | 1.0 | 1.0 | 1.0 | 1.0 | 1.0 | 3.0 | 1.0 | 1.0 | 1.0 | 1.0 |
| Third glass substrate (mm) | 3.5 | 4 | 2.4 | 4 | 2.4 | 3.5 | 4 | 2.4 | 4 | 2.4 |
| Second adhesive layer (mm) | 5.0 | 5.0 | 5.0 | 5.0 | 5.0 | 3.0 | 5.0 | 5.0 | 5.0 | 5.0 |
| Second glass substrate (mm) | 2.0 | 2.0 | 2.0 | 2.0 | 2.0 | 3.5 | 5.8 | 5.8 | 4.2 | 4.2 |
| Maximum static pressure (Maximum N) | 3278 | 3986 | 4014 | 2991 | 3132 | 2895 | 2789 | 2987 | 2284 | 1886 |

As shown in Table 2, in example 6, the thickness of the first adhesive layer is less than the thickness of the second adhesive layer, the thickness of the first glass substrate is greater than the thickness of the third glass substrate, and the thickness of the third glass substrate is greater than the thickness of the second glass substrate. However, in comparative example 6, the thickness of the first adhesive layer is equal to the thickness of the second adhesive layer, and the thickness of the first glass substrate, the thickness of the third glass substrate, and the thickness of the second glass substrate are equal. In addition, the sum of the thickness of the first adhesive layer and the thickness of the second adhesive layer in example 6 is equal to the sum of the thickness of the first adhesive layer and the thickness of the second adhesive layer in comparative example 6. The total thickness of the first glass substrate, the third glass substrate, and the second glass substrate in example 6 is equal to the total thickness of the first glass substrate, the third glass substrate, and the second glass substrate in comparative example 1.

However, in the maximum static pressure test, the maximum static pressure of example 6 is greater than the maximum static pressure of comparative example 6 for the following reasons. In the maximum static pressure test, the impact of the external pressure acts on the first glass substrate first, and then the impact is transmitted to the third glass substrate and the second glass substrate in sequence after being received and absorbed by the first glass substrate. The first glass substrate absorbs most of the impact force, and the third glass substrate and the second glass substrate absorb less of the impact force. Therefore, even though the thickness of the second glass substrate in comparative example 6 is greater than the thickness of the glass substrate in example 1, the second glass substrate exhibits no significant gain. When the laminated glass is impacted by the external pressure, the laminated glass is deformed under the external pressure. When the external pressure acts on the laminated glass, the external pressure directly acts on the first glass substrate, and in this case, the thickness of the first adhesive layer is designed to be relatively thin, which helps to ensure the stability of the connection between the first glass substrate and other components of the laminated glass. Then, when the impact of the external pressure reaches the second adhesive layer, the impact of the external pressure has been gradually weakened, and in this case, the second adhesive layer is designed to be relatively thick and less hard, so that the deformation of the laminated glass under the external pressure can be absorbed, thereby realizing a buffering effect and improving the overall stability of the laminated glass. Therefore, example 6 has a greater maximum static pressure value and better structural stability than comparative example 6.

In the comparison formed between example 7 and comparative example 7, the comparison formed between example 8 and comparative example 8, the comparison formed between example 9 and comparative example 9, and the comparison formed between example 10 and comparative example 10, the first adhesive layers of laminated glass used for the comparison are the same, and the second adhesive layers of laminated glass used for the comparison are the same.

In each of example 7, example 8, example 9, and example 9, the thickness of the first glass substrate is greater than the thickness of the third glass substrate, and the thickness of the third glass substrate is greater than the thickness of the second glass substrate. In each of comparative example 7, comparative example 8, comparative example 9, and comparative example 10, the thickness of the first glass substrate is less than the thickness of the third glass substrate, and the thickness of the third glass substrate is less than the thickness of the second glass substrate. In addition, the total thickness of the first glass substrate, the third glass substrate, and the second glass substrate in example 7 is equal to the total thickness of the first glass substrate, the third glass substrate, and the second glass substrate in comparative example 7. The total thickness of the first glass substrate, the third glass substrate, and the second glass substrate in example 8 is equal to the total thickness of the first glass substrate, the third glass substrate, and the second glass substrate in comparative example 8. The total thickness of the first glass substrate, the third glass substrate, and the second glass substrate in example 9 is equal to the total thickness of the first glass substrate, the third glass substrate, and the second glass substrate in comparative example 9. The total thickness of the first glass substrate, the third glass substrate, and the second glass substrate in example 10 is equal to the total thickness of the first glass substrate, the third glass substrate, and the second glass substrate in comparative example 10.

In the maximum static pressure test, the maximum static pressure of example 7 is greater than the maximum static pressure of comparative example 7, the maximum static pressure of example 8 is greater than the maximum static pressure of comparative example 8, the maximum static pressure of example 9 is greater than the maximum static pressure of comparative example 9, and the maximum static pressure of example 10 is greater than the maximum static pressure of comparative example 10, which indicates the following. Under the condition that the first adhesive layer is the same as the second adhesive layer, the impact of the external pressure is transmitted to the third glass substate and the second glass substrate in sequence after being absorbed by the first glass substrate. The first glass substrate absorbs most of the impact force, and the third glass substrate and the second glass substrate absorb less of the impact force. Therefore, even though the thickness of the second glass substrate in example 7 is less than the thickness of the second glass substrate in comparative example 7 and the thickness of the second glass substrate in example 8 is less than the thickness of the second glass substrate in comparative example 8, the second glass substrate exhibits no significant gain in improving the overall strength of the laminated glass. Therefore, example 7 has a greater maximum static pressure value and better structural stability than comparative example 7, and example 8 has a greater maximum static pressure value and better structural stability than comparative example 8.

In conclusion, when multiple glass substrates and multiple adhesive layers are alternately stacked to prepare the laminated glass, the multiple glass substrates are arranged in a manner of gradually reducing the thickness in one direction, and the multiple adhesive layers are arranged in a manner of gradually increasing the thickness in the direction. Therefore, on the premise that the total thickness of the laminated glass is determined, the laminated glass having higher structural stability can be obtained. In other words, the laminated glass with less materials and lighter weight can be obtained on the premise that the requirements for structural stability are determined.

**Table 3**

| | Example 11 | Example 12 | Example 13 | Example 14 | Example 15 | Comparative example 11 | Comparative example 12 | Comparative example 13 | Comparative example 14 | Comparative example 15 |
|---|---|---|---|---|---|---|---|---|---|---|
| First glass substrate (mm) | 2.0 | 2.9 | 1.2 | 2.0 | 2.0 | 2.0 | 1.0 | 1.0 | 2.0 | 2.0 |
| First adhesive layer (mm) | 1.0 | 1.0 | 1.0 | 1.0 | 1.0 | 3.0 | 1.0 | 1.0 | 8.0 | 1.1 |
| First functional layer (nm) | 0.7 | 0.7 | 0.7 | 0.7 | 0.7 | 0.7 | 0.7 | 0.7 | 0.7 | 0.7 |
| Connectin g layer (nm) | 0.38 | 0.38 | 0.38 | 0.38 | 0.38 | 0.38 | 0.38 | 0.38 | 0.38 | 0.38 |
| Second functional layer (nm) | 0.34 | 0.34 | 0.34 | 0.34 | 0.34 | 0.34 | 0.34 | 0.34 | 0.34 | 0.34 |
| Second adhesive layer (mm) | 5.0 | 5.0 | 5.0 | 8.0 | 1.1 | 3.0 | 5.0 | 5.0 | 1.0 | 1.0 |
| Second glass substrate (mm) | 1.0 | 1.0 | 1.0 | 1.0 | 1.0 | 2.0 | 2.9 | 1.2 | 1.0 | 1.0 |
| Maximum static pressure (Maximum N) | 1178 | 1239 | 1231 | 1149 | 987 | 796 | 991 | 813 | 698 | 672 |

As shown in Table 3, in example 11, the thickness of the first adhesive layer is less than the thickness of the second adhesive layer, and the thickness of the first glass substrate is greater than the thickness of the second glass substrate. However, in comparative example 11, the thickness of the first adhesive layer is equal to the thickness of the second adhesive layer, the thickness of the first glass substrate is equal to the thickness of the second glass substrate. In addition, the sum of the thickness of the first adhesive layer and the thickness of the second adhesive layer in example 11 is equal to the sum of the thickness of the first adhesive layer and the thickness of the second adhesive layer, and the total thickness of the first glass substrate and the second glass substrate in example 1 is less than the total thickness of the first glass substrate and the second glass substrate in comparative example 1.

However, in the maximum static pressure test, the maximum static pressure of example 11 is greater than the maximum static pressure of comparative example 11 for the following reasons. In the maximum static pressure test, the impact of the external pressure acts on the first glass substrate first, and then the impact is transmitted to the second glass substrate after being received and absorbed by the first glass substrate. The first glass substrate absorbs most of the impact force and the second glass substrate absorbs less of the impact force. Therefore, even though comparative example 11 has the greater thickness, the second glass substrate exhibits no significant gain. When the laminated glass is impacted by the external pressure, the laminated glass is deformed under the external pressure. When the external pressure acts on the laminated glass, the external pressure directly acts on the first glass substrate, and in this case, the thickness of the first adhesive layer is designed to be relatively thin, which helps to ensure the stability of the connection between the first glass substrate and other components of the laminated glass. Then, when the impact of the external pressure reaches the second adhesive layer, the impact of the external pressure has been gradually weakened, and in this case, the second adhesive layer is designed to be relatively thick and less hard, so that the deformation of the laminated glass under the external pressure can be absorbed, thereby realizing a buffering effect and improving the overall stability of the laminated glass. Therefore, example 11 has a greater maximum static pressure value and better structural stability than comparative example 11.

In the comparison formed between example 12 and comparative example 12, as well as the comparison formed between example 13 and comparative example 13, the first adhesive layers of laminated glass used for the comparison are the same, and the second adhesive layers of laminated glass used for the comparison are the same. In each of example 12 and example 13, the thickness of the first glass substrate is greater than the thickness of the second glass substrate. In each of comparative example 12 and comparative example 13, the thickness of the first glass substrate is less than the thickness of the second glass substrate. In addition, the total thickness of the first glass substrate and the second glass substrate in example 12 is equal to the total thickness of the first glass substrate and the second glass substrate in comparative example 12. The total thickness of the first glass substrate and the second glass substrate in example 13 is equal to the total thickness of the first glass substrate and the second glass substrate in comparative example 13. In the maximum static pressure test, the maximum static pressure of example 12 is greater than the maximum static pressure of comparative example 12, and the maximum static pressure of example 13 is greater than the maximum static pressure of comparative example 13, which indicates the following. Under the condition that the first adhesive layer is the same as the second adhesive layer, the impact of the external pressure is transmitted to the second glass substrate after being absorbed by the first glass substrate. The first glass substrate absorbs most of the impact force, and the second glass substrate absorbs less of the impact force. Therefore, even though the total thickness of the first glass substrate and the second glass substrate in example 12 is equal to the total thickness of the first glass substrate and the second glass substrate in comparative example 12, and the total thickness of the first glass substrate and the second glass substrate in example 3 is equal to the total thickness of the first glass substrate and the second glass substrate in comparative example 13, the second glass substrate exhibits no significant gain in improving the overall strength of the laminated glass. Therefore, example 12 has a greater maximum static pressure value and better structural stability than comparative example 12, and example 13 has a greater maximum static pressure value and better structural stability than comparative example 13.

In the comparison formed between example 14 and comparative example 14, as well as the comparison formed between example 15 and comparative example 15, the first glass substrates of laminated glass used for the comparison are the same, and the second glass substrates of laminated glass used for the comparison are the same. In each of example 14 and example 15, the thickness of the first adhesive layer is less than the thickness of the second adhesive layer. In each of comparative example 14 and comparative example 15, the thickness of the first adhesive layer is greater than the thickness of the second adhesive layer. In addition, the total thickness of the first glass substrate and the second glass substrate in example 14 is equal to the total thickness of the first glass substrate and the second glass substrate in comparative example 14. The total thickness of the first glass substrate and the second glass substrate in example 15 is equal to the total thickness of the first glass substrate and the second glass substrate in comparative example 15. In the maximum static pressure test, the maximum static pressure of example 14 is greater than the maximum static pressure of comparative example 14, and the maximum static pressure of example 15 is greater than the maximum static pressure of comparative example 15, which indicates the following. Under the condition that the first glass substrate is the same as the second glass substrate, when the laminated glass is impacted by the external pressure, the laminated glass is deformed under the external pressure. When the external pressure acts on the laminated glass, the external pressure directly acts on the first glass substrate, and in this case, the thickness of the first adhesive layer is designed to be relatively thin, which helps to ensure the stability of the connection between the first glass substrate and other components of the laminated glass. Then, when the impact of the external pressure reaches the second adhesive layer, the impact of the external pressure has been gradually weakened, and in this case, the second adhesive layer is designed to be relatively thick and less hard, so that the deformation of the laminated glass under the external pressure can be absorbed, thereby realizing a buffering effect and improving the overall stability of the laminated glass. Therefore, example 14 has a greater maximum static pressure value and better structural stability than comparative example 14, and example 15 has a greater maximum static pressure value and better structural stability than comparative example 15.

Referring to FIG. 4, a vehicle 200 is further provided in the present disclosure. The vehicle 200 includes a vehicle body 9 and the laminated glass 100 of the present disclosure. The first glass substrate 1 faces the exterior of the vehicle body. The second glass substrate 5 faces the interior of the vehicle body 9.

For the laminated glass 100 of the present disclosure, by increasing the thickness of part of the laminated glass 100 at the stressed side of the laminated glass 100 and reducing the thickness of part of the laminated glass 100 at the non-stressed side of the laminated glass 100, the overall mechanical strength of the laminated glass 100 is improved, the weight of the laminated glass is reduced. The vehicle window of the vehicle 200 of the present disclosure is equipped with the laminated glass 100, so that the vehicle window has high strength and good safety performance parameters. Meanwhile, by reducing the weight of the vehicle window, the overall weight of the vehicle 200 is reduced, so that the energy consumption of the vehicle 200 is reduced, and the vehicle 200 has a better sound insulating effect.

The terms of "embodiment" and "implementation" mentioned in the present disclosure means that the specific features, structures, or characteristics described with reference to the embodiments may be encompassed in at least one embodiment of the present disclosure. The phrase at various locations in the specification does not necessarily refer to the same embodiment, or an independent or alternative embodiment exclusive of another embodiment. Those skilled in the art may understand explicitly and implicitly that the embodiments described in the present disclosure may be combined with other embodiments. In addition, it may also be understood that the features, structures or characteristics described in the embodiments of the present disclosure may be combined as desired to obtain embodiments without departing from the spirit and scope of the technical solution of the present disclosure if there is no contradiction between the embodiments.

Finally, it may be noted that the above implementations are merely used for illustrating rather than limiting the technical solutions of the present disclosure; and although the present disclosure has been described in detail with reference to the preferred implementations, those skilled in the art may understand that modifications or equivalent substitutions may be made to the technical solutions of the present disclosure without departing from the spirit and scope of the technical solutions of the present disclosure.

## Claims

1. Laminated glass comprising a first glass substrate, a first adhesive layer, a first functional layer, a second adhesive layer, and a second glass substrate, wherein the first glass substrate, the first adhesive layer, the first functional layer, the second adhesive layer, and the second glass substrate are sequentially stacked; and a thickness of the first glass substrate is greater than a thickness of the second glass substrate, and a thickness of the first adhesive layer is less than a thickness of the second adhesive layer.

2. The laminated glass of claim 1, wherein a ratio of the thickness of the first glass substrate to the thickness of the second glass substrate ranges from 1.17: 1 to 2.91: 1.

3. The laminated glass of claim 2, wherein the ratio of the thickness of the first glass substrate to the thickness of the second glass substrate ranges from 1.17: 1 to 1.5: 1.

4. The laminated glass of claim 1, wherein a ratio of the thickness of the first adhesive layer to the thickness of the second adhesive layer ranges from 1: 8 to 1: 1.1.

5. The laminated glass of claim 1, wherein a mechanical strength of the first glass substrate is greater than a mechanical strength of the second glass substrate.

6. The laminated glass of claim 1, wherein a hardness of the second adhesive layer is less than a hardness of the first adhesive layer.

7. The laminated glass of claim 1, wherein the first functional layer is at least one of an infrared reflecting layer, an ultraviolet absorbing layer, a touch film layer, a polymer dispersed liquid crystal (PDLC) film layer, and a display film.

8. The laminated glass of any one of claims 1 to 6, wherein the first functional layer is a third glass substrate, the thickness of the first glass substrate is greater than a thickness of the third glass substrate, and the thickness of the third glass substrate is greater than the thickness of the second glass substrate.

9. The laminated glass of claim 8, wherein a ratio of the thickness of the first glass substrate to the thickness of the third glass substrate to the thickness of the second glass substrate is (2.91 to 2): (2 to 1.17): 1.

10. The laminated glass of claim 9, wherein the ratio of the thickness of the first glass substrate to the thickness of the third glass substrate to the thickness of the second glass substrate is (1.5 to 1.3): (1.3 to 1.17): 1.

11. The laminated glass of claim 8, wherein a mechanical strength of the first glass substrate is greater than a mechanical strength of the third glass substrate, and the mechanical strength of the third glass substrate is greater than a mechanical strength of the second glass substrate.

12. The laminated glass of any one of claims 1 to 7, further comprising a second functional layer and a connecting layer, wherein the second functional layer is disposed between the first functional layer and the second adhesive layer, and the connecting layer is disposed between the first functional layer and the second functional layer, and is configured to connect the first functional layer to the second functional layer.

13. The laminated glass of claim 12, wherein a thickness of the first functional layer is greater than a thickness of the second functional layer.

14. The laminated glass of claim 12, wherein a ratio of a thickness of the first functional layer to a thickness of the second functional layer ranges from 2: 1 to 3: 1.

15. The laminated glass of claim 12, wherein a hardness of the first functional layer is greater than a hardness of the second functional layer.

16. The laminated glass of claim 12, wherein a thickness of the connecting layer ranges from 0.1 mm to 0.4 mm.

17. The laminated glass of claim 16, wherein the thickness of the connecting layer ranges from 0.1 mm to 0.2 mm.

18. The laminated glass of claim 12, wherein the second functional layer is at least one of an infrared reflecting layer, an ultraviolet absorbing layer, a touch film layer, a PDLC film layer, and a display film.

19. The laminated glass of claim 12, further comprising a touch film layer, wherein the touch film layer is disposed between the second glass substrate and the second adhesive layer, and the touch film layer is configured to detect a touch signal.

20. A vehicle comprising:
a vehicle body; and
the laminated glass of any one of claims 1 to 19, wherein the first glass substrate faces an exterior of the vehicle body, and the second glass substrate faces an interior of the vehicle body.
